Europäisches Patentamt

European Patent Office

Office européen des brevets

(19)

(11) Numéro de publication: 0 232 950
A1

# (12) DEMANDE DE BREVET EUROPEEN

(21) Numéro de dépôt: 87200194.6

(22) Date de dépôt: 09.02.87

(51) Int. Cl.⁴: A01K 97/00 , A01K 85/00

(30) Priorité: 12.02.86 FR 8601994

(43) Date de publication de la demande:
19.08.87 Bulletin 87/34

(84) Etats contractants désignés:
AT BE CH DE ES FR GB GR IT LI LU NL SE

(71) Demandeur: Giraudo, Pierre
53 route de Blagnac
F-31200 Toulouse(FR)
Demandeur: Ruggeri, Jean-Pierre
49 route de Blagnac
F-31200 Toulouse(FR)

(72) Inventeur: Giraudo, Pierre
53 route de Blagnac
F-31200 Toulouse(FR)
Inventeur: Ruggeri, Jean-Pierre
49 route de Blagnac
F-31200 Toulouse(FR)

(74) Mandataire: Barre, Philippe
Cabinet Barre-Gatti-Laforgue 95 rue des
Amidonniers
F-31069 Toulouse Cédex(FR)

(54) Dispositif de pêche pourvu d'au moins un hamecon.

(57) L'invention concerne un dispositif de pêche pourvu d'au moins un hameçon (5), apte à permettre d'obtenir un décrochage dudit hameçon en cas d'accrochage ou de coincement accidentel de celui-ci. Ce dispositif comprend un corps creux (1) sur lequel est directement articulé l'hameçon, un ressort (9) logé à l'intérieur du corps et venant en appui dans celui-ci à l'opposé de l'hameçon, une tige coulissante (8) passant à travers le corps, une masse intérieure (7) solidaire de la tige et agencée pour former un contre-appui pour le ressort et pour venir frapper l'hameçon lors de la détente dudit ressort, et une masse extérieure (10) fixée sur la tige à l'extérieur du corps à l'opposé de l'hameçon de façon à venir frapper le corps lors de la détente du ressort, sensiblement au moment de l'impact de la masse intérieure (7).

Fig. 1

## DISPOSITIF DE PECHE POURVU D'AU MOINS UN HAMECON

L'invention concerne un dispositif de pêche pourvu d'au moins un hameçon, apte à permettre d'obtenir un décrochage dudit hameçon en cas d'accrochage ou de coincement accidentel de celui-ci.

Dans le brevet US 3 037 315 est décrit un dispositif de pêche du type ci-dessus évoqué qui combine essentiellement les moyens suivants : un corps creux, une queue prolongeant le corps et à laquelle est lié l'hameçon, un ressort logé dans le corps et une tige coulissante attachée au fil et passant dans le corps pour venir frapper la queue lors de la détente du ressort. Cette tige permet de comprimer le ressort par une traction sur le fil lorsque l'hameçon est accroché et forme une masse qui transmet à la queue portant l'hameçon une impulsion de décrochage, lorsque le ressort se détend à la suite d'un relâchement du fil.

Un tel dispositif permet dans certains cas d'obtenir un décrochage de l'hameçon. Toutefois, les essais effectués ont montré qu'il possède une efficacité médiocre, notamment lorsque l'hameçon accroché ne se trouve pas dans l'alignement du corps et du fil. Or, ce cas est très fréquent en pratique lorsqu'on accroche un hameçon sur un obstacle dans une situation réelle (troncs d'arbre au fond de l'eau, branchages, rochers...). Il arrive même, pour certains angles, que l'impulsion sur la queue (à laquelle est lié l'hameçon par des oeillets s'interpénétrant) ait tendance à fermer encore davantage l'angle entre hameçon et corps et à augmenter la pénétration de l'hameçon dans l'obstacle.

De plus, l'hameçon monté entièrement libre de pivoter au bout de la queue peut se trouver en position défavorable pour l'attaque du poisson.

La présente invention se propose de fournir un dispositif perfectionné, exempt des défauts du dispositif ci-dessus évoqué.

Un objectif essentiel de l'invention est de fournir un dispositif bénéficiant d'une excellente efficacité de décrochage de l'hameçon quelle que soit la façon dont celui-ci se trouve accroché, même en cas d'accrochage profond.

Un autre objectif est de fournir un dispositif apte à présenter l'hameçon dans une position favorable pour l'attaque du poisson, tout en écartant les risques de décrochage du poisson après ferrage.

A cet effet, le dispositif visé par l'invention, interposé entre au moins un hameçon et un fil pour permettre le décrochage dudit hameçon en cas d'accrochage ou de coincement accidentel, comprend un corps creux doté d'un côté d'un fond, des moyens élastiques disposés à l'intérieur du corps creux en appui contre le fond de celui-ci, une tige coulissante passant à travers ledit fond pour être attachée au fil à l'extérieur du corps, et une masse, dite masse intérieure, solidaire de la tige et agencée à l'intérieur du corps de façon à former un contre-appui pour les moyens élastiques en vue de permettre une compression de ceux-ci ; selon la présente invention, le dispostif se caractérise en ce que :

. l'hameçon est directement articulé sur le corps à l'opposé du fond, au moyen d'un embout d'hameçon pénétrant à l'extrémité du corps,

. la masse intérieure est agencée dans le corps de façon à venir directement frapper ledit embout d'hameçon lors de la détente des moyens élastiques,

. une seconde masse, dite extérieure, est fixée extérieurement sur la tige en regard du fond du corps, en position adaptée pour venir frapper ledit corps lors de la détente des moyens élastiques, sensiblement au moment de l'impact de la masse intérieure sur l'embout d'hameçon.

Les expérimentations ont montré que le dispositif de l'invention permettait un décrochage remarquablement efficace de l'hameçon, même dans le cas où celui-ci se trouve profondément accroché. Cet effet provient, d'une part, de l'action de frappe directe de la masse intérieure, laquelle percute directement l'embout d'hameçon (c'est-à-dire un élément d'un seul tenant avec l'hameçon), d'autre part, de la conjugaison des frappes simultanées sur le corps et sur l'hameçon. En particulier, une frappe limitée à l'hameçon est souvent insuffisante pour assurer le décrochage, alors que la double frappe transmet au corps une impulsion en direction de l'hameçon et évite que ledit corps subisse au moment du décrochage un effort dans la direction opposée à l'hameçon (par réaction du ressort), effort qui viendrait réduire ou neutraliser l'impulsion de la masse intérieure sur l'hameçon.

Selon un mode de réalisation préféré, l'embout d'hameçon comprend un anneau formé par l'extrémité de la tige d'hameçon, cet anneau étant engagé autour d'un axe solidaire du corps, de façon que l'hameçon puisse pivoter autour de cet axe.

De plus, selon une autre caractéristique de l'invention, la masse intérieure comprend des moyens d'appui contre l'anneau d'hameçon, adaptés pour assurer un redressement de l'hameçon lors du contact de ladite masse avec ledit anneau. Cette disposition améliore encore l'effet de décrochage : la frappe directe de la masse intérieure sur l'embout d'hameçon s'accompagne d'un effet de redressement de l'hameçon en cas d'inclinaison de celui-ci par rapport au corps ; les impulsions agissent ainsi dans une direction favorable par rapport à l'hameçon (direction commune de l'hameçon et du corps ou direction faiblement inclinée par rapport à celle-ci).

De plus, pendant l'action de pêche, la masse intérieure est en appui contre l'anneau d'hameçon et a tendance à maintenir élastiquement ledit hameçon en position redressée, ce qui lui confère une position favorable pour l'attaque du poisson. Lorsque le poisson a mordu l'hameçon, celui-ci reprend sa liberté car la masse intérieure recule dans le corps et n'est plus en appui contre l'embout d'hameçon. L'hameçon peut ainsi tourillonner librement autour de son axe, ce qui écarte les risques de décrochage du poisson après ferrage.

Par ailleurs, la masse intérieure et la masse extérieure présentent de préférence des formes adaptées pour assurer un centrage de la tige coulissante dans le corps, lequel est intérieurement prévu de forme cylindrique.

D'autres caractéristiques, buts et avantages de l'invention ressortiront de la description qui suit, en référence aux dessins annexés, lesquels en présentent, à titre d'exemple non limitatif, un mode de réalisation ; sur ces dessins qui font partie intégrante de la présente description :

-la figure 1 est une vue en coupe axiale à échelle dilatée d'un dispositif conforme à l'invention,

-la figure 2 en est une coupe de détail par le même plan axial que la figure 1,

-la figure 3 en est une coupe de détail par un plan axial orthogonal au précédent,

-les figures 4 et 5 sont des schémas explicatifs de fonctionnement du dispositif,

-la figure 6 est un schéma illustrant l'utilisation du dispositif.

Le dispositif représenté à titre d'exemple aux figures est destiné à équiper une ligne de pêche, en vue de lier un hameçon au fil de celle-ci et permettre de le décrocher en cas d'accrochage ou de coincement accidentel sur un obstacle.

Ce dispositif comprend un corps creux 1 qui possède une forme générale cylindrique, avec une âme creuse cylindrique. A une extrémité, le corps est doté d'un fond 2 percé d'un passage axial qui s'évase vers d'extérieur pour former un logement tronconique 3.

Le corps 1 est ouvert à l'extrémité opposée au fond et comporte un rebord périphérique 4 orienté vers l'intérieur.

Le corps est formé de deux pièces la et 1b qui sont emboîtées et fixées l'une à la suite de l'autre. En l'exemple représenté, le dispositif constitue un leurre du type cuiller et la pièce la est pourvue extérieurement d'une rainure en hélice 1c, classique pour ce type de leurre.

A son extrémité ouverte, le corps 1 porte un hameçon 5 formé de crochets classiques et d'un embout d'hameçon 5a. Celui-ci est constitué par un anneau engagé autour d'un axe 6 ; cet axe est solidaire du corps et agencé de façon à couper perpendiculairement l'axe longitudinal de celui-ci. Cet axe 6 peut être indroduit en force dans des lumières pratiquées de part et d'autre de la pièce 1b de façon à être démontable par poussée, en vue de la mise en place ou du retrait de l'hameçon 5.

L'axe 6 est positionné à hauteur du rebord 4 et l'hameçon peut ainsi librement tourner sur 360° avec une limite de pivotement due à la butée de l'anneau 5a contre le rebord 4. Ce rebord peut être agencé par rapport à l'axe et à l'anneau pour permettre un pivotement maximum de l'hameçon d'angle de 30° (demi-angle au sommet du cône de pivotement).

Par ailleurs, le corps 1 contient une masse intérieure 7 qui est portée par l'extrémité d'une tige 8 apte à coulisser le long de l'axe longitudinal du corps.

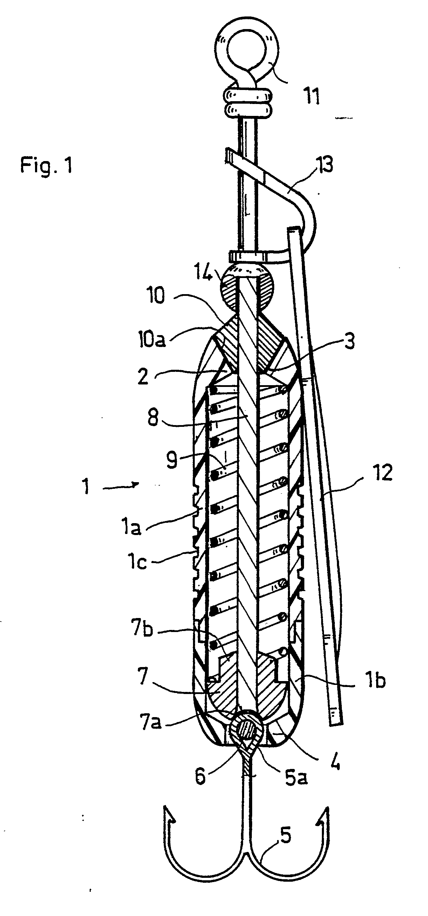

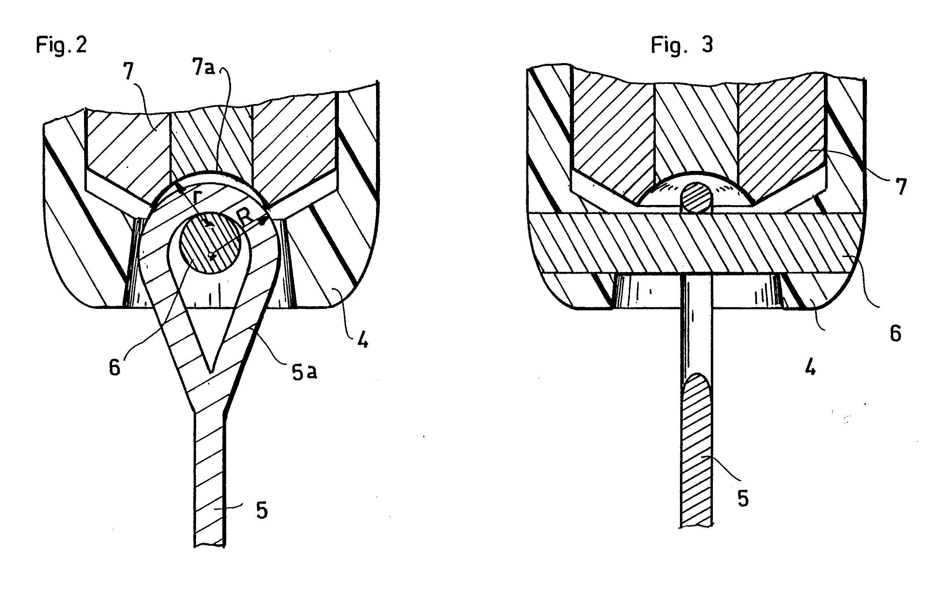

En fin de course, la masse 7 vient en appui contre l'anneau d'hameçon 5a par des moyens d'appui constitués par une face concave 7a que comporte ladite masse en regard de l'anneau ; cette face concave possède un rayon de courbure $r$ inférieur à celui $R$ de l'anneau dans le plan perpendiculaire à l'axe 6 (plan des coupes des figures 1 et 2).

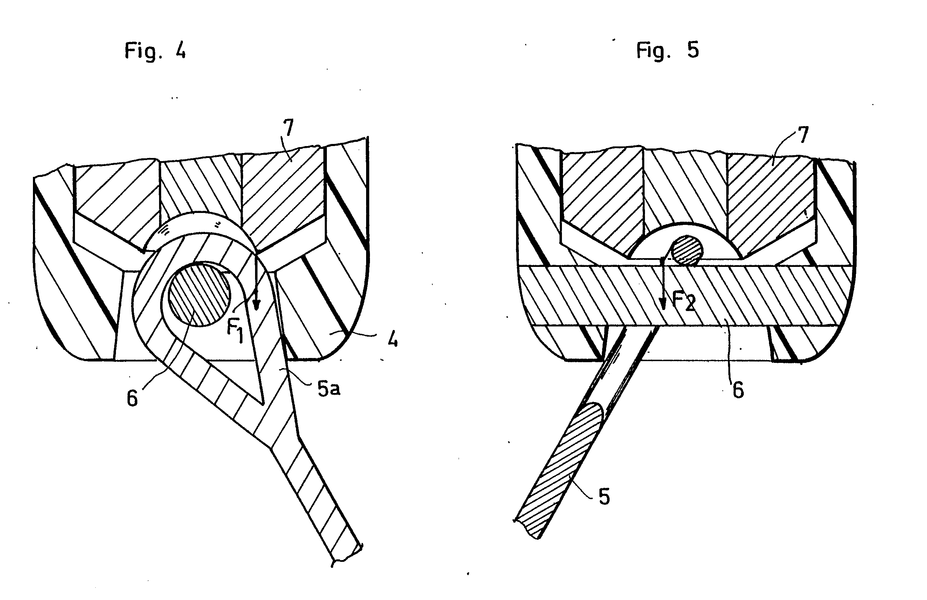

Ainsi, comme l'illustrent les figures 4 et 5, l'appui ou la percussion de la masse 7 sur l'anneau 5a tend à redresser l'hameçon 5 vers l'axe longitudinal du corps en cas d'inclinaison dudit hameçon et ce, quel que soit le plan de cette inclinaison : en effet le contact de la masse 7 se trouve alors excentré par rapport au point de pivotement de l'anneau et exerce une force $F_1$ ou $F_2$ développant un couple qui tend à ramener l'hameçon vers la position centrale.

La masse intérieure 7 possède, du côté interne, un téton de centrage 7b autour duquel s'engage l'extrémité d'un ressort de type à boudin 9 qui repousse ladite masse vers l'anneau 5a.

Ce ressort 9 s'étend autour de la tige coulissante 8 pour venir en appui, par son autre extrémité, contre le fond 2 du corps.

Par ailleurs, la tige coulissant 8 traverse le corps par le passage axial de son fond et porte extérieurement une autre masse 10, dite extérieure.

Cette masse extérieure possède une portion tronconique 10a de forme conjuguée à celle du logement 3 pour venir se loger dans celui-ci lorsque ressort est détendu ; la masse extérieure 10 est fixée sur la tige en position logitudinale telle qu'elle vient en appui dans le logement du corps lorsque la masse intérieure 7 vient elle-même en appui contre l'anneau 5a d'hameçon.

Ainsi, une traction sur la tige 8 comprime le ressort 9 et écarte les masses 7 et 10 de leurs appuis respectifs : le relâchement de la tige libère le ressort qui se détend et les deux masses viennent, en fin de course, percuter en même temps leurs appuis respectifs : anneau 5a ou corps 1.

A l'extérieur du corps, la tige possède une extrémité formant une boucle 11 d'attache du fil. De plus, en l'exemple d'un leurre du type cuiller, une pallette tournante 12 est accrochée à un étrier 13 lequel est monté sur la tige 8 de façon à pouvoir pivoter autour de celle-ci, une bille 14 formant butée tournante pour la base de cet étrier.

Bien entendu, le dispositif conforme à l'invention peut faire partie d'un leurre de type différent : poisson nageur, monture, etc... ; il peut aussi équiper un hameçon simple ou plusieurs hameçons destinés à recevoir un appât.

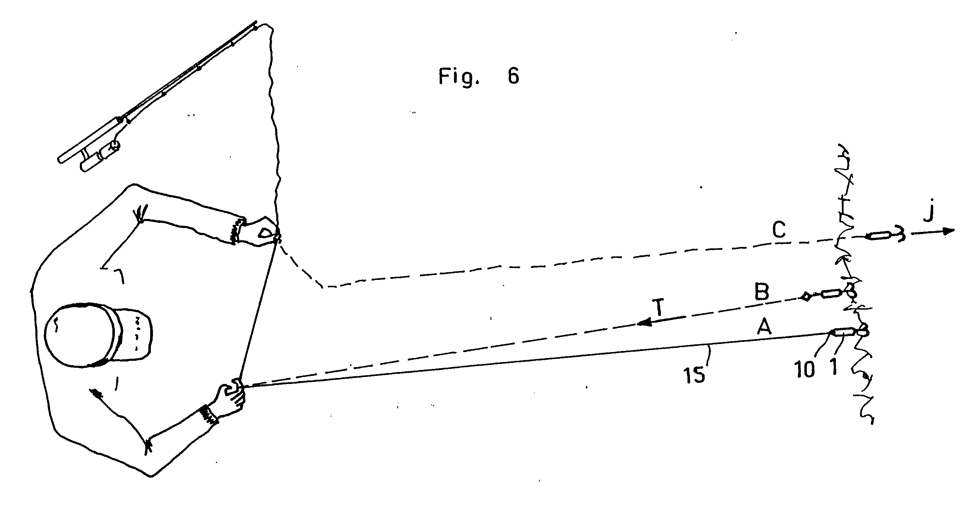

La figure 6 illustre l'utilisation du dispositif. En cas d'accrochage sur un obstacle de l'hameçon 5 - (position A), le pêcheur exerce d'une main une traction T sur le fil 15, ce qui comprime le ressort à l'intérieur du corps et déplace les deux masses 7 et 10 ; de l'autre main, il maintient le fil en amont. Il lâche ensuite brusquement le fil de la première main (position C) : le ressort se détend, entraînant les deux masses qui viennent simultanément frapper leurs appuis respectifs ; le corps reçoit ainsi une impulsion dirigée dans le sens de la flèche J, cependant que l'hameçon reçoit directement une impulsion dirigée dans le même sens. Par la combinaison de ces impulsions et de l'effet de redressement, l'hameçon est violemment repoussé vers l'arrière de l'obstacle, ce qui assure sa libération.

**Revendications**

1/ -Dispositif de pêche, pourvu d'au moins un hameçon (5) destiné à être attaché à un fil, en vue de permettre un décrochage dudit hameçon en cas d'accrochage ou de coincement accidentel, ce dispositif comprenant un corps creux (1) doté d'un côté d'un fond (2), des moyens élastiques (9) disposés à l'intérieur du corps creux en appui contre le fond de celui-ci, une tige coulissante (8) passant à travers ledit fond pour être attachée au fil à l'extérieur du corps, et une masse, dite masse intérieure (7), solidaire de la tige et agencée à l'intérieur du corps de façon à former un contre-appui pour les moyens élastiques en vue de permettre une compression de ceux-ci, ledit dispositif étant caractérisé en ce que :

. l'hameçon (5) est directement articulé sur le corps (1) à l'opposé du fond (2), au moyen d'un embout d'hameçon (5a) pénétrant à l'extrémité du corps,

. la masse intérieure (7) est agencée dans le corps de façon à venir directement frapper ledit embout d'hameçon (5a) lors de la détente des moyens élastiques (9),

. une seconde masse, dite extérieure (10), est fixée extérieurement sur la tige (8) en regard du fond - (2) du corps, en position adaptée pour venir frapper ledit corps lors de la détente des moyens élastiques (9), sensiblement au moment de l'impact de la masse intérieure (7) sur l'embout d'hameçon (5a).

2/ -Dispositif de pêche selon la revendication 1, caractérisé en ce que l'embout d'hameçon (5a) comprend un anneau engagé autour d'un axe (6) solidaire du corps (1), de façon que l'hameçon puisse pivoter autour de cet axe.

3/ -Dispositif de pêche selon la revendication 2, caractérisé en ce que la masse intérieure (7) comprend des moyens d'appui (7a) contre l'anneau d'hameçon (5a), adaptés pour assurer un redressement de l'hameçon (5) lors du contact de ladite masse (7) avec ledit anneau (5a).

4/ -Dispositif de pêche selon la revendication 3, caractérisé en ce que les moyens d'appui sont constitués par une face concave (7a) que comporte la masse intérieure (7) en regard de l'anneau d'hameçon (5a), ladite face concave ayant un rayon de courbure (r) inférieur à celui (R) de l'anneau (5a) dans le plan perpendiculaire à l'axe (6).

5/ -Dispositif de pêche selon l'une des revendications 2, 3 ou 4, caractérisé en ce que, à l'opposé du fond (2), le corps (1) est ouvert et comprend un rebord (4) orienté vers l'intérieur, adapté pour limiter le pivotement de l'hameçon (5) par butée de son anneau (5a) contre ledit rebord.

6/ -Dispositif de pêche selon l'une des revendications 2, 3, 4 ou 5, caractérisé en ce que l'axe (6) est engagé en force dans des lumières pratiquées de part et d'autre du corps (1), de façon à être démontable.

7/ -Dispositif de pêche selon l'une des revendications 1, 2, 3, 4, 5 ou 6, caractérisé en ce que le fond (2) du corps comprend un logement (3) s'ouvrant vers l'extérieur, la masse extérieure (10) possédant une portion en regard (10a), de forme conjuguée à celle dudit logement.

8/ -Dispositif de pêche selon la revendication 7, dans lequel le corps (1) présente une forme interne cylindrique, la tige coulissante (8) étant disposée selon son axe longitudinal et traversant le fond du corps à travers un passage axial, caractérisé en ce que :

. le logement externe (3) du fond est de forme sensiblement tronconique,

. la masse extérieure (10) possède une portion tronconique (10a) apte à venir se loger dans ledit logement, avec une action de centrage de la tige - (8) par appui de ladite masse extérieure,

. la masse intérieure (7) présente une section conjuguée de celle interne du corps cylindrique - (1), apte à coulisser avec un jeu à l'intérieur de celui-ci, en vue de réaliser un centrage de la tige - (8) au niveau de ladite masse intérieure (7).

9/ -Dispositif selon la revendication 8, dans lequel les moyens élastique sont constitués par un ressort (9) du type à boudin, en appui d'un côté contre le fond (2) du corps et, de l'autre, contre la masse intérieure (7), cette dernière possédant un téton (7b) de centrage dudit ressort.

Fig. 1

Fig. 2

Fig. 3

0 232 950

Fig. 5

Fig. 4

7

6

5

F₂

7

6

5a

4

F₁

Fig. 6

C

B

T

A

15

10 1

j

0 232 950

## DOCUMENTS CONSIDERES COMME PERTINENTS

| Catégorie | Citation du document avec indication, en cas de besoin, des parties pertinentes | Revendication concernée | CLASSÉMENT DE LA DEMANDE (Int. Cl.4) |
|---|---|---|---|
| D,Y | US-A-3 037 315  (KLAWITTER) <br> * En entier * | 1 | A 01 K  97/00 <br> A 01 K  85/00 |
| A |  | 9 | |
| Y | US-A-3 521 394  (WINTERSBERGER) <br> * Colonne 3, lignes  37-53;  figures 1-4 * | 1 | |
| A |  | 2,6 | |
| Y | US-A-3 465 465  (SMIZASKI) <br> * En entier * | 1 | |
| A |  | 8,9 | **DOMAINES TECHNIQUES RECHERCHES (Int. Cl.4)** |
| A | FR-A-  986 156  (BOURGOIN) | | A 01 K |
| A | US-A-3 714 730  (LLOYD) | | |
| A | US-A-2 198 043  (SCOGLAND) <br> * En entier * | 1,2,6 | |
| A | US-A-2 153 489  (WHITIS) <br> * En entier * | 1,9 | |
|   | ---          -/- | | |

Le présent rapport de recherche a été établi pour toutes les revendications

| Lieu de la recherche | Date d'achèvement de la recherche | Examinateur |
|---|---|---|
| LA HAYE | 15-04-1987 | VERDOODT S.J.M. |

# Office européen des brevets

## RAPPORT DE RECHERCHE EUROPEENNE

| | DOCUMENTS CONSIDERES COMME PERTINENTS | Page 2 | |
|---|---|---|---|
| Catégorie | Citation du document avec indication, en cas de besoin, des parties pertinentes | Revendication concernée | CLASSEMENT DE LA DEMANDE (Int. Cl.4) |
| A | US-A-2 079 335 (PFLUEGER) | | |
| A | US-A-2 739 407 (GODSEY) | | |
| | | | DOMAINES TECHNIQUES RECHERCHES (Int. Cl.4) |

Le présent rapport de recherche a été établi pour toutes les revendications

| Lieu de la recherche | Date d'achèvement de la recherche | Examinateur |
|---|---|---|
| LA HAYE | 15-04-1987 | VERDOODT S.J.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82